# EUROPÄISCHE PATENTANMELDUNG

(11) **EP 1 107 389 A1**
(43) Veröffentlichungstag der Anmeldung: **13.06.2001**
(21) Anmeldenummer: 00124985.3
(22) Anmeldetag: 16.11.2000
(51) Int. Cl.: H01R 13/74

(54) **Beleuchtungseinrichtung für ein Fahrzeug**

(30) Priorität: 07.12.1999 DE 19958808
(71) Anmelder: Bayerische Motoren Werke Aktiengesellschaft, 80809 München (DE)
(72) Erfinder: Ripperger, Joachim, 85774 Unterföhring (DE); Befelein, Carsten, 85640 Putzbrunn (DE)

(57) **Zusammenfassung**

Die Erfindung betrifft eine Beleuchtungseinrichtung für ein Fahrzeug mit einem Fahrzeug-Leuchtengehäuse, in dem zumindest eine LED aufgenommen ist.

Zur Kostensenkung und Erhöhung der Servicefreundlichkeit wird vorgeschlagen, wenigstens eine austauschbare LED-Einheit, auf der die zumindest eine LED fest angeordnet ist, zu verwenden, wobei die austauschbare LED-Einheit elektrische Kontakte besitzt und die austauschbare LED-Einheit derart lösbar im Fahrzeug-Leuchtengehäuse aufgenommen und gehalten ist, daß beim Einbau der LED-Einheit eine elektrische Verbindung zwischen den elektrischen Kontakte einerseits und Kontakten des Gehäuses andererseits herstellbar ist.

## Beschreibung

Die Erfindung betrifft eine Beleuchtungseinrichtung für ein Fahrzeug mit einem Fahrzeug-Leuchtengehäuse, in dem zumindest eine LED aufgenommen ist.

Der Einsatz von Lumineszenzdioden (kurz: LED für light emitting diode) in Beleuchtungseinrichtungen ist allgemein bekannt. Meist werden die LED's auf Platinen oder Stanzgittern fest montiert und sind daher nicht oder nur schwer austauschbar.

Allerdings sind auch Vorrichtungen bekannt, in denen Leuchtdioden austauschbar aufgenommen werden. In diesem Zusammenhang wird auf die US 5,700,157, die DE 33 01 154 A1 und die EP 0 122 642 A1 verwiesen.

Die vorgenannten Vorrichtungen sind jedoch nicht geeignet für eine Beleuchtungseinrichtung in einem Fahrzeug, die nicht nur kostengünstig sondern auch servicefreundlich sein soll.

Ziel der vorliegenden Erfindung ist es, eine Beleuchtungseinrichtung für ein Fahrzeug zu schaffen, welche gerade diese Voraussetzungen im Zusammenhang mit einer in einem Fahrzeug-Leuchtengehäuse aufgenommenen LED erfüllt.

Die Aufgabe wird durch die im Anspruch 1 angegebenen Merkmale gelöst.

Demgemäß liegt ein Kerngedanke der vorliegenden Erfindung darin, wenigstens eine austauschbare LED-Einheit vorzusehen, die mit einer von der Anzahl der LED's abhängigen Anzahl von elektrischen Kontakten ausgestattet ist und lösbar in dem Fahrzeug-Leuchtengehäuse aufgenommen ist und darin gehalten werden kann. Durch die Anordnung der LED-Einheit am oder im Fahrzeug-Leuchtengehäuse wird eine elektrische Verbindung der LED's über Kontakte des Gehäuses hergestellt.

Eine vorteilhafte Ausführungsform der Erfindung ist dadurch gekennzeichnet, daß die LED-Einheit in eine Ausnehmung des Fahrzeug-Leuchtengehäuses einsetzbar ist und so einen Teil des Leuchtengehäuses selbst bildet. Natürlich können auch mehrere LED-Einheiten in dafür vorgesehene Ausnehmungen einsetzbar sein. Stellt man sich beispielsweise die Rücklichtanordnung bei einem Fahrzeug, bestehend aus einem Bereich für die Rückleuchte, die Bremsleuchten, die Rückfahrleuchte und die Fahrtrichtungsanzeigeleuchte vor, so kann jede der dieser Einheiten zugeordneten Leuchtenform von einer vorliegend beschriebenen LED-Einheit ausgebildet werden. Das Fahrzeug-Leuchtengehäuse würde in diesem Fall eine entsprechende Anzahl von Öffnungen aufweisen, in die etwa in Leuchtrichtung eine LED-Einheit von außen eingesetzt werden kann.

Der Übergangsbereich zwischen einer austauschbaren LED-Einheit und dem Fahrzeug-Leuchtengehäuse ist vorzugsweise abgedichtet, beispielsweise mit einer Dichtschnur.

Darüber hinaus ist es von Vorteil, wenn die Rückwand der austauschbaren LED-Einheit wasserundurchlässig ausgebildet ist. Neben der Wasserundurchlässigkeit kann die Ausbildung natürlich auch säurefest oder korrosionsbeständig erfolgen. Insgesamt ist dadurch ein dichtes Leuchtengehäuse gewährleistet, das gut im Fahrzeugbereich einsetzbar ist.

Alternativ kann die austauschbare LED-Einheit auch auf eine Fläche des Fahrzeug-Leuchtengehäuses, beispielsweise in dessen Innenraum, aufgesteckt werden. Dabei kann gemäß einer Ausführungsform eine Abdeckung des Leuchtengehäuses abgenommen und dann eine LED-Einheit an eine Rückwand des Fahrzeug-Leuchtengehäuses aufgesteckt werden. In diesem Fall wäre eine Abdichtung zwischen LED-Einheit und Fahrzeug-Leuchtengehäuse nicht unbedingt notwendig.

Zur Kontaktierung zwischen LED-Einheit und Fahrzeug-Leuchtengehäuse kann jegliche Art von bekannter Kontaktierung verwendet werden.

Alternativ kann zur Kontaktierung auch eine separate Kontaktierungseinrichtung verwendet werden, welche die Herstellung einer Kontaktverbindung zwischen Fahrzeug-Leuchtengehäuse und austauschbarer LED-Einheit übernimmt.

Von besonderem Vorteil ist die Ausbildung von Rastorganen und komplementären Rastorganen an der LED-Einheit bzw. dem Fahrzeug-Leuchtengehäuse. Durch die Anordnung solcher Rastorgane kann die LED-Einheit in einfacher und funktionssicherer Weise mit dem Fahrzeug-Leuchtengehäuse verbunden werden. Als Rast- oder aber Halteelemente können alle bekannten Verbindungen oder Einrichtungen verwendet werden.

Die vorliegende Erfindung wird nachfolgend anhand mehrerer Ausführungsbeispiele und mit Bezugnahme auf die beiliegenden Zeichnungen näher erläutert. Die Zeichnungen zeigen in
- Fig. 1a: eine schematische Querschnittsansicht durch eine erfindungsgemäße Beleuchtungseinrichtung gemäß einem ersten Ausführungsbeispiel,
- Fig. 1b: eine Detailquerschnittsansicht eines Übergangsbereichs von LED-Einheit und Fahrzeug-Leuchtengehäuse gemäß der ersten Ausführungsform der vorliegenden Erfindung,
- Fig. 2: eine schematische Querschnittsansicht einer LED-Einheit gemäß einer zweiten Ausführungsform einer erfindungsgemäßen Beleuchtungseinrichtung und
- Fig. 3: eine schematische Querschnittsansicht durch eine erfindungsgemäße Beleuchtungseinrichtung gemäß einem dritten Ausführungsbeispiel.

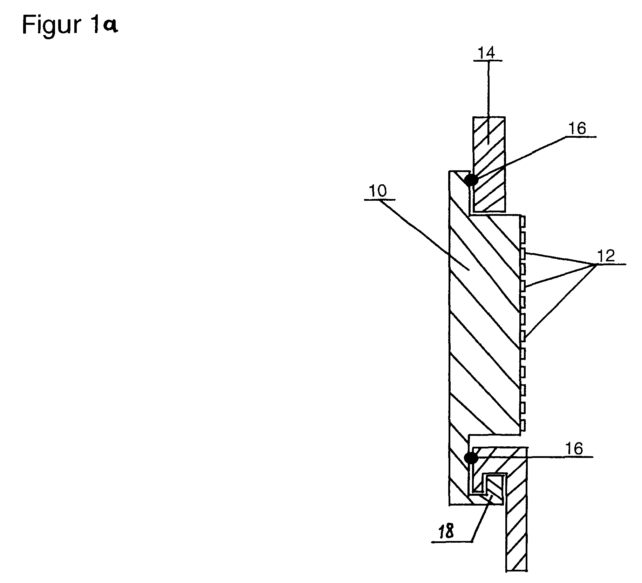

In Fig. 1a ist ein Teil einer Beleuchtungseinrichtung (auch Leuchte) bei einem Kraftfahrzeug in schematischer Schnittansicht dargestellt. Die Beleuchtungseinrichtung umfaßt ein (nur teilweise dargestelltes) Fahrzeug-Leuchtengehäuse 14, in welchem eine Öffnung vorgesehen ist. In diese Öffnung ist eine LED-Einheit 10, die im wesentlichen T-förmigen Querschnitt aufweist, formschlüssig eingefügt. Dabei liegen die Unterseiten des Querschenkels an einer Außenfläche des Fahrzeug-Leuchtengehäuses 14 an. An der der Innenseite des Leuchtengehäuses 14 zugewandten und in den Innenraum hineinragenden Seite der LED-Einheit 10 sind eine Vielzahl von LED's 12 (light emitting diodes) angeordnet.

Zwischen der LED-Einheit 10 und dem Fahrzeug-Leuchtengehäuse 14 ist eine Dichtung 16 in Form einer Rundschnur vorgesehen. Durch Verwendung einer solchen Dichtung sowie einer wasserundurchlässigen Ausbildung der Außen- bzw. Rückseite der LED-Einheit 10 wird insgesamt eine das Leuchtengehäuse 14 und die LED-Einheit 10 umfassende Beleuchtungseinrichtung geschaffen, deren Innenraum abgedichtet ist.

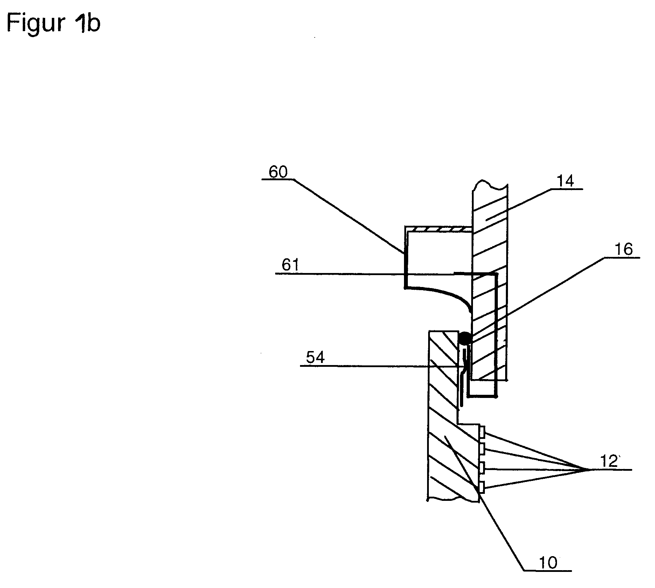

Eine Kontaktierung der LED-Einheit 10 ist in Fig. 1b dargestellt. Kontakte 54 (z.B. Federkontakte) der LED's sind aus der LED-Einheit 10 herausgeführt und so angeordnet, daß sie mit an dem Fahrzeug-Leuchtengehäuse 14 vorgesehenen Leiterbahnen 61 bei eingesetzter LED-Einheit 10 zur Anlage kommen. Nach dem Einsetzen der LED-Einheit 10 liegen die Kontakte 54 der LED-Einheit 10 an in dem Fahrzeug-Leuchtengehäuse angeordneten Leiterbahnen 61 an. Die Leiterbahnen verlaufen überwiegend im Leuchtengehäuse 14 und enden mit einem Ende, und zwar in Form von Pins, in einem Zentralstecker 60. Über diesen Zentralstecker 60 erfolgt nicht nur die Stromversorgung sondern auch die Ansteuerung der LED-Einheit 10.

An einer Seite der LED-Einheit 10 (vgl. Fig. 1a unten) ist ein Hakenelement 18 vorgesehen, welches in eine komplementär ausgebildete Aufnahme des Fahrzeug-Leuchtengehäuses 14 eingreift, so daß die LED-Einheit 10 vom Fahrzeug-Leuchtengehäuse 14 gehalten wird.

An der gegenüberliegenden Seite der LED-Einheit 10 wird diese über eine Schraube (nicht dargestellt) mit dem Fahrzeug-Leuchtengehäuse 14 verbunden. Alternativ ist an dieser Stelle eine Rasteinrichtung vorgesehen, so daß die LED-Einheit 10 rastend mit dem Fahrzeug-Leuchtengehäuse 14 verbunden werden kann.

Alternativ können natürlich auch andere Verbindungsvarianten zwischen LED-Einheit 10 und Leuchtengehäuse 14, wie Bajonett-, Steck- oder Rastsysteme, verwendet werden.

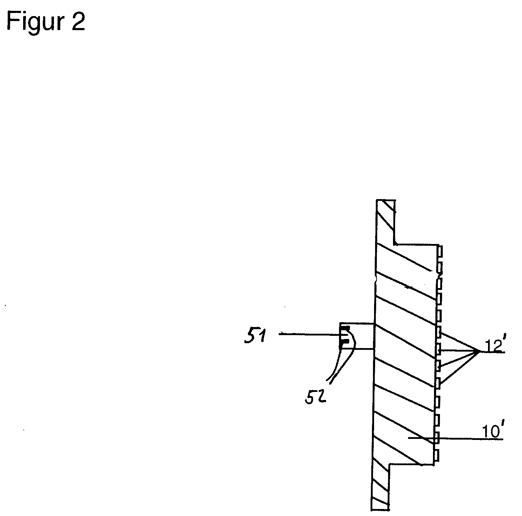

Eine zweite Ausführungsform der vorliegenden Erfindung wird mit Bezug auf die Fig. 2a und 2b näher beschrieben.

Die Fig. 2a zeigt eine LED-Einheit 10', die ebenfalls einen in etwa T-förmigen Querschnitt aufweist und an einer Innenfläche des Längsschenkels eine Vielzahl von LED's 12' besitzt. Auf der die LED's 12' tragenden Fläche gegenüberliegenden Fläche ist ein Stecker 51 mit einer nicht dargestellten Rastnase angeordnet. Der Stekker 51 wird in einer komplementären Ausnehmung eines nunmehr anders ausgeführten Fahrzeug-Leuchtengehäuses 14 (nicht dargestellt) aufgenommen und in verrastender Form gehalten.

Bei der gerade beschriebenen Ausführungsform ist die LED-Einheit nicht Teil der Außenseite des Fahrzeug-Leuchtengehäuse. Vielmehr wird das Fahrzeug-Leuchtengehäuse durch Abnahme eines nicht dargestellten Abdeckglases geöffnet. Nach Abnahme des Abdeckglases sind die in Form der LED-Einheiten 10' vorliegenden Module, die an der Rückseite des Leuchtengehäuses innen zugänglich angeordnet sind, aus dem Leuchtengehäuse entnehmbar und können gegen eine andere LED-Einheit ausgetauscht werden.

Der Stecker 51 weist eine Reihe von Kontaktierungen 52 auf. Diese Kontaktierungen stellen mit entsprechend ausgebildeten Kontakten in der komplementären Ausnehmung des Fahrzeug-Leuchtengehäuses eine elektrischen Verbindung zur LED-Einheit 10' her.

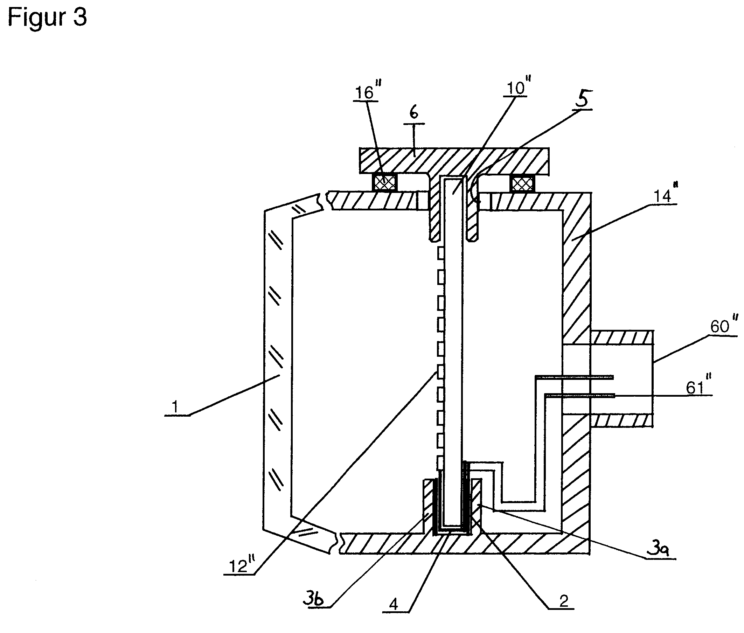

Eine weitere Ausführungsform der Erfindung ist in Fig. 3 dargestellt. Ein Leuchtengehäuse 14" ist im wesentlichen quaderförmig ausgebildet und besitzt an seiner Unterseite innen zwei parallel verlaufende Stege 3a, 3b zwischen denen eine Nut ausgebildet ist. Am hinteren Teil des Leuchtengehäuses 14" (in Fig. 3 rechts) ist ein Zentralstecker 60" mit Stiftkontakten 61" vorgesehen. Die Kontakte 61" sind elektrisch mit einer Kontaktleiste 2 verbunden, die in die Nut zwischen den Stegen 3a und 3b eingesetzt ist. Im oberen Teil des Leuchtengehäuses 14" gegenüberliegend der Nut und mit dieser im wesentlichen deckungsgleich verlaufend ist ein Schlitz 5 ausgebildet, durch den eine LED-Einheit 10" in das Leuchtengehäuse 14" einführbar ist. Zum Einführen der LED-Einheit 10" und gleichzeitig zum Abschließen des Leuchtengehäuses 14" wird ein mit etwa T-förmigem Querschnitt ausgebildetes Einführelement 6 verwendet, dessen Längsbalken zur Aufnahme eines Randes der LED-Einheit 10" ebenfalls eine Nut aufweist. Die LED-Einheit 10" ist in dieser Nut reibschlüssig gehalten. Sie wird mittels dem Einführelement 6 derart durch den Schlitz 5 in das Leuchtengehäuse 14" eingeführt, daß der dem Einführelement 6 gegenüberliegende Rand in der unteren Nut, insbesondere in Anlage mit der Kontaktleiste 2, aufgenommen ist. Dabei kommen Kontaktlamellen 4 der LED-Einheit 10" mit zugeordneten Kontakten der Kontaktleiste 2 in Anlage. Um das Leuchtengehäuse 14" gegenüber der Umwelt abzuschließen ist eine zwischen den Querschenkeln des Einführelements 6 und dem Leuchtengehäuse 14" umlaufende Dichtschnur 16" vorgesehen. Das von den LED 12" auf der LED-Einheit 10" abgegebene Licht tritt durch eine Lichtscheibe 1 des Leuchtengehäuses 14" aus.

Im Prinzip wird mit der Ausführungsform gemäß Fig. 3 ein Steckprinzip wie bei den Einschubkarten eines PC's verwendet, wobei eine LED-Einheit einfach in das Leuchtengehäuse eingeschoben und dabei gleichzeitig kontaktiert wird. Durch eine entsprechende Ausbildung der beteiligten Elemente erreicht man ein insgesamt dichtes Gehäuse, wobei die LED-Einheit verrastend, verschraubt oder anderweitig gehalten werden kann.

Natürlich sind bei allen Ausführungsvarianten prinzipiell auch andere Kontaktierungmöglichkeiten denkbar. Die vorliegenden Ausführungsformen sollen insofern nicht beschränkend wirken.

Insgesamt sind durch die vorliegende Ausführungsformen Möglichkeiten für ein einfaches Ersetzen der LED-Einheit aufgezeigt. Beim Ausfall einer LED muß nicht die ganze Beleuchtungseinrichtung ausgetauscht werden. Natürlich können auch mehrere, möglicherweise verschiedene LED-Einheiten in der Beleuchtungseinrichtung aufgenommen sein. Zeigt eine LED-Einheit eine Fehlfunktion, so braucht nur diese eine LED-Einheit ausgetauscht zu werden. Dies führt insgesamt zu einer kostengünstigen Anordnung und einer servicefreundlichen Beleuchtungseinrichtung.

Bildet man die LED-Einheiten als genormte Module aus, so ist eine Gleichteilverwendung auch für andere Leucht- und Lichtfunktionen möglich. Dies führt umso mehr zu einer erhöhten Servicefreundlichkeit und einer kostengünstigen Reparatur.

Durch eine vorzugsweise wasserdichte Ausführung der vorliegenden Beleuchtungseinrichtung gelingt auch ein Verzicht auf eine konventionelle und kostenintensive Abdichtung einer Leuchte gegenüber der Karosserie eines Fahrzeugs.

## Patentansprüche

1. Beleuchtungseinrichtung für ein Fahrzeug mit einem Fahrzeug-Leuchtengehäuse (14, 14"), in dem zumindest eine LED (12, 12', 12") aufgenommen ist,
dadurch gekennzeichnet,
daß wenigstens eine austauschbare LED-Einheit (10, 10', 10"), auf der die zumindest eine LED (12, 12', 12") fest angeordnet ist, vorgesehen ist,
daß die austauschbare LED-Einheit (10, 10', 10") elektrische Kontakte (4, 54) besitzt und
daß die austauschbare LED-Einheit (10, 10', 10") derart lösbar im Fahrzeug-Leuchtengehäuse (14, 14") aufgenommen und gehalten ist, daß beim Einbau der LED-Einheit (10, 10', 10") eine elektrische Verbindung zwischen den elektrischen Kontakte (4, 54) einerseits und Kontakten (2, 61) des Gehäuses (14, 14', 14") andererseits herstellbar ist.

2. Beleuchtungseinrichtung nach Anspruch 1,
dadurch gekennzeichnet,
daß die austauschbare LED-Einheit (10, 10") in eine Ausnehmung des Fahrzeug-Leuchtengehäuses (14, 14") einsetzbar ist.

3. Beleuchtungseinrichtung nach Anspruch 2,
dadurch gekennzeichnet,
daß an Übergangsbereichen zwischen einer austauschbaren LED-Einheit (10, 10") und dem Fahrzeug-Leuchtengehäuse (14, 14") eine Abdichtung (16, 16") vorgesehen ist.

4. Beleuchtungseinrichtung nach Anspruch 3,
dadurch gekennzeichnet,
daß die Abdichtung durch eine Dichtschnur (16, 16") zwischen dem Fahrzeug-Leuchtengehäuse (14) einerseits und der austauschbaren LED-Einheit (10) oder einer der LED-Einheit (10, 10") zugeordneten Abdeckeinheit (6) andererseits gebildet ist.

5. Beleuchtungseinrichtung nach einem der vorhergehenden Ansprüche,
dadurch gekennzeichnet,
daß zumindest eine Rückwand der austauschbaren LED-Einheit (10) wasserundurchlässig ausgebildet ist.

6. Beleuchtungseinrichtung nach Anspruch 1,
dadurch gekennzeichnet,
daß die austauschbare LED-Einheit (10') auf eine Fläche des Fahrzeug-Leuchtengehäuses aufsteckbar ist.

7. Beleuchtungseinrichtung nach einem der vorhergehenden Ansprüche,
dadurch gekennzeichnet,
daß zumindest zwei austauschbare LED-Einheiten (10, 10', 10") im Fahrzeug-Leuchtengehäuse (14, 14', 14") vorgesehen sind.

8. Beleuchtungseinrichtung nach einem der vorhergehenden Ansprüche,
dadurch gekennzeichnet,
daß zum Befestigen der LED-Einheit (10, 10', 10") an dem Fahrzeug-Leuchtengehäuse (14, 14") ein Bajonett-, Steck- oder Rastsystem, insbesondere mit Federkontaktierung, verwendet wird.

9. Beleuchtungseinrichtung nach einem der vorhergehenden Ansprüche,
dadurch gekennzeichnet,
daß eine separate Kontaktierungseinrichtung (2, 4) zur Herstellung einer Kontaktverbindung zwischen Fahrzeug-Leuchtengehäuse (14") und austauschbarer LED-Einheit (10") vorgesehen ist.

10. Beleuchtungseinrichtung nach einem der vorhergehenden Ansprüche,
dadurch gekennzeichnet,
daß ein Rastorgan an der austauschbaren LED-Einheit ausgebildet ist, welches mit einem komlementär dazu ausgebildetem Rastorgan derart zusammenwirkt, daß eine Rastverbindung zwischen austauschbarer LED-Einheit und Fahrzeug-Leuchtengehäuse herstellbar ist.
